# FASCICULE DE BREVET EUROPEEN

(11) **EP 2 160 501 B1**
(45) Date de publication et mention de la délivrance du brevet: **28.11.2012**
(21) Numéro de dépôt: 08761370.9
(22) Date de dépôt: 25.06.2008
(51) Int. Cl.: E05F 15/20, B62D 25/12, G01S 13/93, E05F 15/00

(54) **PROCEDE SECURISE DE FERMETURE AUTOMATIQUE D'UN HAYON DE VEHICULE AUTOMOBILE**
SICHERES VERFAHREN ZUM AUTOMATISCHEN SCHLIESSEN EINER KRAFTFAHRZEUGHECKKLAPPE
SECURE METHOD FOR AUTOMATICALLY CLOSING A MOTOR VEHICLE TAILGATE

(30) Priorité: 25.06.2007 FR 0704549
(43) Date de publication de la demande: 10.03.2010
(73) Titulaire: Valeo Securité Habitacle, 94042 Créteil Cedex (FR)
(72) Inventeur: GEHIN, Frédéric, F-94012 Creteil Cedex (FR)
(74) Mandataire: Croonenbroek, Thomas Jakob
(86) Numéro de dépôt international: PCT/EP2008/058094
(87) Numéro de publication internationale: WO 2009/000861

(56) Documents cités:
- EP-A- 0 598 951
- WO-A-02/053413
- WO-A-03/048492
- US-A1- 2004 040 771

## Description

La présente invention a pour objet un procédé sécurisé de fermeture automatique d'un coffre de véhicule automobile, le coffre étant de type hayon. L'invention a essentiellement pour but de sécuriser, pour un utilisateur de véhicule automobile, une opération de fermeture d'un hayon de son véhicule, en s'assurant que ledit utilisateur ne se trouve pas dans une zone dite de détection, sa présence dans une telle zone ayant pour fâcheuse conséquence une entrée en contact de sa personne avec le hayon lors de la fermeture de celui-ci.

Le domaine de l'invention est, d'une façon générale, celui des dispositifs dits de confort d'utilisation des véhicules automobiles, destinés à faciliter pour un utilisateur différentes interventions qu'il effectue sur son véhicule. Parmi ces dispositifs, on connait par exemple des dispositifs de condamnation centralisée des portières et du coffre, des dispositifs de fermeture électrique des vitres, mais également différents dispositifs de fermeture automatique d'ouvrants, par exemple de portes ou de coffre. Dans le cas des portes de certains véhicules, il existe des portes coulissantes dont la fermeture est commandée par une pression de l'utilisateur sur un bouton particulier, présent par exemple sur un dispositif de type identifiant, également susceptible de servir de clé de démarrage du véhicule, ou directement sur le véhicule. Dans le cas des coffres, il existe également la possibilité d'exercer une pression sur un bouton, le plus souvent situé à l'extrémité la plus accessible du coffre lorsqu'il est en position ouverte, pour provoquer la fermeture immédiate dudit coffre.

Par exemple, dans le cas des coffres de type hayon, certains véhicules disposent au niveau de l'extrémité libre dudit hayon, souvent du côté droit de celui-ci, d'un bouton de commande dédié à la fermeture automatique du hayon : une pression par un utilisateur, placé sous le hayon, sur ce bouton dédié déclenche la fermeture immédiate du hayon. Un tel véhicule est décrit dans le document WO 03/048492.

Un problème est rapidement apparu avec de tels dispositifs pour lesquels le déclenchement de l'opération de fermeture est immédiat : l'utilisateur se trouve alors encore sous le hayon lorsque l'opération de fermeture débute. Il peut être apeuré par le déclenchement du mouvement, et n'a, en tout état de cause, que peu de temps pour se placer hors de la trajectoire du hayon lorsque celui-ci se referme. Certains dispositifs prévoient des détecteurs de choc qui permettent d'arrêter le mouvement du coffre quand celui-ci entre en contact avec un obstacle. Mais de tels dispositifs ne sont pas satisfaisants au regard du confort d'utilisation

Afin de répondre à ce problème, on a, dans l'état de la technique comme par exemple dans le EP-0598951, proposé l'utilisation de capteurs qui permettent de détecter la présence d'éléments, et notamment d'individus, dans une zone dite de détection, définie par le principe suivant : si le hayon se fermait alors qu'un élément est placé dans la zone de détection, un choc entre le hayon et l'élément considéré se produirait. Pour réaliser cette détection de présence, différents types de capteurs peuvent être utilisés ; notamment, on peut utiliser des capteurs à ultra-sons qui sont disposés au niveau du pare-choc arrière du véhicule, et qui sont habituellement utilisés pour réaliser une fonction d'aide au stationnement. De tels capteurs permettent d'obtenir une information précise sur la distance entre un élément présent derrière le véhicule et l'arrière du véhicule, et de déterminer ainsi s'il est présent dans ladite zone de détection. D'autres capteurs peuvent également être utilisés. Notamment, on peut utiliser des systèmes à base de caméra et d'algorithmes de traitements d'images pour détecter la présence d'un tel élément et estimer la distance à laquelle il se trouve.

Mais un problème essentiel se pose avec les différents capteurs utilisés : dans tous les cas, il existe au moins une zone, désignée comme zone d'ombre, qui correspond à une partie de la zone de détection dans laquelle la présence d'un élément n'est pas détectée. Dans le cas où les capteurs utilisés sont des caméras, les zones d'ombre correspondent à des zones situées à l'arrière du véhicule qui ne sont pas visibles sur l'image, à cause par exemple de l'orientation de la caméra ou de son angle de vue.

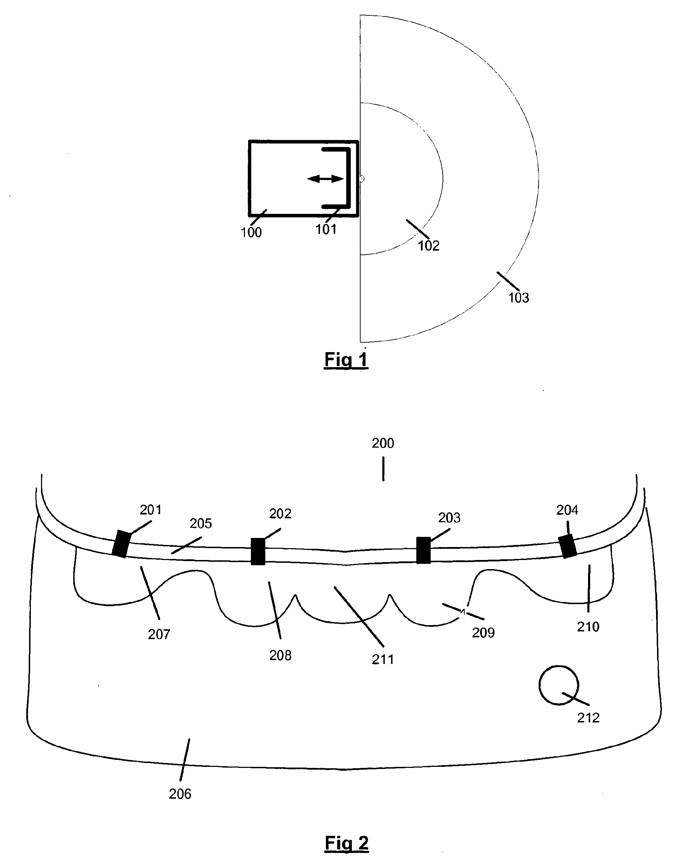

Dans le cas où les capteurs utilisés sont des capteurs à ultra-sons, par exemple utilisés pour la fonction d'aide au stationnement, la présence des zones d'ombre est due au phénomène suivant, illustré notamment au moyen des figures 1 et 2.

Sur la figure 1, on a représenté de façon schématique un premier capteur à ultra-sons 100 utilisé pour les fonctions d'aide au stationnement. Un tel capteur possède une membrane mobile 101. Dans le cas des détections directes, c'est-à-dire le cas où c'est le même capteur 100 qui émet une onde dans une zone de propagation 103, et qui récupère cette onde une fois réfléchie par un obstacle, c'est la même membrane 101 qui est utilisée pour émettre et pour recevoir l'onde émise. Après avoir excité cette membrane pour émettre les ultra-sons, il faut environ 1 milliseconde pour que la membrane se stabilise, c'est-à-dire pour qu'elle redevienne immobile, et pour qu'elle puisse de nouveau réagir à une éventuelle onde en retour. Du fait de la vitesse de propagation des ultra-sons dans l'air, voisine de 330 mètres par seconde, l'onde a le temps, en une milliseconde, de parcourir 34 centimètres. En conséquence, un obstacle situé à moins de 17 centimètres du capteur, nécessitant donc un parcours de 34 centimètres aller-retour pour partir de la membrane et revenir à la membrane, ne sera pas visible par le capteur considéré, la membrane de celui-ci n'ayant pas eu le temps de se stabiliser. La zone proche du capteur et non visible par celui-ci est ainsi définie comme une zone d'ombre 102.

Outre les détections directes qui viennent d'être détaillées, on a mis en place des détections croisées, dans lesquelles un premier capteur émet une onde, et un deuxième capteur récupère l'onde réfléchie par un obstacle détecté. De telles détections croisées nécessitent une bonne synchronisation de l'ensemble des capteurs intervenant. Elles permettent de limiter sensiblement les zones d'ombre qui viennent d'être mentionnées, sans pour autant les faire disparaitre totalement.

La figure 2 montre la zone située à l'arrière d'un véhicule 200 ; sur cette figure, le pare-choc arrière 205 du véhicule est équipé de quatre capteurs à ultra-sons du même type que le capteur de la figure 1, référencés respectivement, en les considérant de gauche à droite, 201, 202, 203 et 204. Chacun de ces capteurs présente, dans une zone de détection 206, une zone d'ombre qui lui est propre, référencée respectivement 207, 208, 209 et 210.

Dans un mode de réalisation non limitatif, la zone de détection 206 correspond à une projection verticale sur le sol du hayon quand il est ouvert.

Outre les zones d'ombre qui viennent d'être mentionnées, il existe également une zone d'ombre centrale 211, qui n'est pas située en vis-à-vis d'un des capteurs, mais qui résulte de la forme du pare-choc arrière : celui-ci étant bombé, les capteurs 202 et 203, fonctionnant en détection croisée, donnent naissance à la zone d'ombre centrale 211.

Un problème important se pose alors pour les opérations de fermeture automatiques de hayons : lorsqu'une opération de fermeture automatique doit être réalisée, les capteurs dédiés sont destinés à vérifier la présence ou non d'un élément, notamment d'un individu, dans une zone de détection déterminée. Si aucune présence n'est détectée, alors la fermeture automatique du hayon est entamée. Or si l'individu se trouve dans une zone d'ombre, sa présence n'a pas pu être détectée alors qu'il est pourtant présent dans la zone de détection. Le choc avec le hayon est alors inévitable.

L'objet de l'invention propose une solution aux problèmes qui viennent d'être mentionnés. Dans l'invention, on propose des moyens pour éviter que le hayon, lors de son mouvement de fermeture automatique, n'entre en collision avec un obstacle, notamment un individu, quand bien même celui-ci se trouverait dans une zone d'ombre de la zone de détection. A cet effet, on propose dans l'invention de respecter une séquence d'opérations pour s'assurer qu'aucun élément ne se trouve dans une zone d'ombre au moment où l'opération de fermeture pourrait débuter. Ainsi, dans l'invention, la fermeture est conditionnée par une première opération de détection d'un élément dans la zone de détection, puis par une deuxième opération de sortie de l'élément considéré hors de la zone de détection en s'éloignant du véhicule. Ainsi, dans l'hypothèse où un individu se trouverait dans une zone d'ombre à un instant où la fermeture automatique serait susceptible de se déclencher, aucune opération de fermeture n'est entreprise tant que l'individu n'est pas sorti dans un premier temps de la zone d'ombre, puis, dans un deuxième temps, de la zone de détection.

L'invention concerne donc essentiellement un procédé sécurisé de fermeture automatique d'un hayon de véhicule automobile équipé d'au moins un capteur de présence d'un élément dans une zone de détection, ladite zone de détection présentant au moins une zone d'ombre, caractérisé en ce qu'il comporte l'étape de conditionner l'opération de fermeture automatique du hayon du véhicule à la réalisation des différentes opérations suivantes:
- détecter la présence d'un élément dans la zone de détection ;
- détecter une sortie dudit élément hors de la zone de détection.

Le procédé comporte l'étape préalable de recevoir une commande de fermeture automatique du coffre du véhicule.

Le procédé comporte les différentes étapes supplémentaires de : - dès la réception de la commande automatique de fermeture automatique du coffre du véhicule, déclencher un premier compte à rebours d'une première durée ; - si aucune présence d'élément n'a été détectée dans la zone de détection à l'issue du premier compte à rebours, annuler l'opération de fermeture automatique du hayon du véhicule.

Outre les caractéristiques principales qui viennent d'être mentionnées dans le paragraphe précédent, le procédé selon l'invention peut présenter une ou plusieurs caractéristiques supplémentaires parmi les suivantes :
- la commande de fermeture est reçue au moyen d'un capteur d'intention ;
- le capteur d'intention est disposé dans le coffre du véhicule, sur une des parois latérales dudit coffre ;
- les capteurs de présence sont des capteurs utilisés pour une fonction d'aide au parking ;
- les capteurs font intervenir au moins une caméra orientée vers l'arrière du véhicule, ladite caméra coopérant avec des applications de traitement d'images ;
- la première durée du compte à rebours est comprise entre 15 et 25 secondes, notamment 20 secondes ;
   - le procédé comporte les différentes étapes supplémentaires de :
- dès la détection de la présence d'un élément dans la zone de détection, déclencher un deuxième compte à rebours d'une deuxième durée ;
- si aucune sortie dudit élément hors de la zone de détection n'est réalisée à l'issue du deuxième compte à rebours, annuler l'opération de fermeture automatique du hayon du véhicule ;
   - la deuxième durée est comprise entre 4 et 10 secondes, notamment 5 secondes ;
   - le procédé comporte l'étape supplémentaire d'interrompre l'opération de fermeture automatique du hayon dès qu'un retour en zone de détection d'un élément est détecté ;
   - le procédé comporte l'étape supplémentaire de reprendre l'opération de fermeture automatique du hayon dès qu'une nouvelle détection de sortie dudit élément hors de la zone de détection est réalisée.
   - la zone de détection est composée de deux sous-zones de détection.
   - la deuxième sous-zone de détection comporte une largeur qui permet de détecter de façon fiable un élément.
   - l'étape de détection de la présence d'un élément dans la zone de détection comporte les sous-étapes de :
      - dès la réception de la commande automatique de fermeture automatique du coffre du véhicule, déclencher un troisième compte à rebours d'une première durée ;
      - si aucune présence d'élément n'a été détectée dans la première sous-zone de détection à l'issue du troisième compte à rebours, annuler l'opération de fermeture automatique du hayon du véhicule.
   - l'étape de détection de la présence d'un élément dans la zone de détection comporte les sous-étapes supplémentaires de :
      - dès la détection de la présence d'un élément dans la première sous-zone de détection, déclencher un quatrième compte à rebours d'une deuxième durée ;
      - si aucune présence d'élément n'a été détectée dans la deuxième sous-zone de détection à l'issue du quatrième compte à rebours, annuler l'opération de fermeture automatique du hayon du véhicule.
   - l'étape de détection de la présence d'un élément dans la zone de détection comporte les sous-étapes supplémentaires de :
      - dès la détection de la présence d'un élément dans la deuxième sous-zone de détection, détecter la présence de l'élément dans la première sous-zone de détection ;
      - si aucune présence d'élément n'a été détectée dans la première sous-zone de détection, procéder à l'opération de fermeture automatique du hayon du véhicule.

- L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure 1, déjà décrite, une représentation schématique d'un capteur utilisé dans une fonction d'aide au parking illustrant la présence d'une zone d'ombre ;
- à la figure 2, également déjà décrite, une représentation schématique selon un premier mode de réalisation non limitatif, d'une zone de détection définie à l'arrière d'un véhicule, mettant en évidence l'existence de zones d'ombre ;
- à la figure 3, un organigramme illustrant un exemple de mise en oeuvre du procédé selon l'invention selon un premier mode de réalisation ;
- à la figure 4, une représentation schématique selon un deuxième mode de réalisation non limitatif, d'une zone de détection définie à l'arrière d'un véhicule, mettant en évidence l'existence de zones d'ombre ; et
- à la figure 5, un organigramme illustrant un exemple de mise en oeuvre du procédé selon l'invention selon un deuxième mode de réalisation.

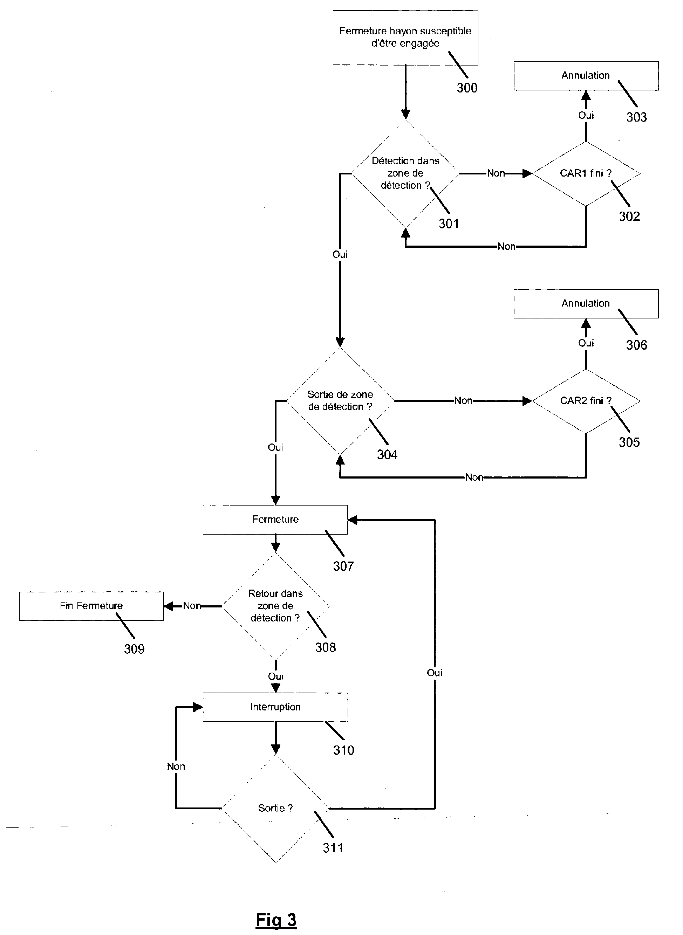

Selon le premier mode de réalisation, une première étape 300 de l'organigramme de la figure 3 réside dans le fait qu'une opération de fermeture automatique du hayon du véhicule est susceptible de se produire. Les cas où une telle fermeture est susceptible de se produire sont variés : par exemple, le véhicule peut disposer d'une unité de contrôle électronique paramétrée pour déterminer que si le hayon est ouvert depuis un certain temps, alors une fermeture automatique de ce hayon peut être déclenchée, éventuellement sous réserves de l'observation de certaines conditions. Dans un autre exemple, la fermeture est susceptible d'intervenir suite à la réception d'une commande de fermeture : une telle commande de fermeture peut par exemple être donnée par l'utilisateur, notamment par l'intermédiaire d'un capteur d'intention, qui mémorise la volonté de l'utilisateur de provoquer la fermeture automatique du hayon ; dans un tel cas de figure, la fermeture effective intervient après l'observation de certaines conditions de sécurité pour assurer une telle fermeture.

A l'issue de l'étape 300 intervient une étape de décision 301 dans laquelle on détermine, au moyen des capteurs précédemment évoqués, si un élément se trouve dans la zone de détection. Dans un mode de réalisation non limitatif, on prévoit de placer un déclencheur de fermeture automatique, par exemple un capteur d'intention, à l'intérieur du coffre, sur un des côtés de celui-ci. Ainsi, l'utilisateur a peu de chance de se trouver dans une zone d'ombre car il devra être placé à l'extrémité, droite par exemple, de la zone de détection. Or, comme visible à la figure 2, une telle extrémité 212 ne constitue pas une zone d'ombre. La présence de l'utilisateur sera ainsi immédiatement détectée. Dans la négative, c'est-à-dire si aucune détection d'élément n'est intervenue, on passe à une étape 302, dans laquelle un premier compte à rebours est déclenché. Tant que le compte à rebours n'est pas arrivé à son terme, on demeure dans l'attente d'une détection dans la zone de détection. Si le compte à rebours arrive à son terme, dans un exemple non limitatif de 20 secondes après la réception d'une commande relative à la fermeture automatique du hayon, alors on passe à une étape 303 dans laquelle l'opération de fermeture automatique est annulée.

Dans l'hypothèse où un élément est détecté dans la zone de détection, une étape de décision 304 intervient, dans laquelle on détermine, toujours au moyen des capteurs évoqués, si l'élément détecté sort de la zone de détection. Dans un mode de réalisation non limitatif, on détermine que l'élément sort de la zone de détection si les capteurs déterminent que la distance qui sépare l'élément considéré de l'arrière du véhicule est supérieure à une valeur préalablement déterminée, par exemple un mètre. Ainsi, le retour dans une zone d'ombre de l'élément considéré n'est pas considéré comme une sortie de la zone de détection. Dans d'autres exemples de mise en oeuvre, on peut prévoir de détecter la sortie non plus de la zone de détection, mais d'une zone de détection sécurisée plus large que la zone de détection telle que précédemment définie.

Dans la négative, c'est-à-dire si on ne détecte pas que l'élément considéré sort de la zone de détection, on passe à une étape 305, dans laquelle un deuxième compte à rebours est déclenché. Tant que le compte à rebours n'est pas arrivé à son terme, on demeure dans l'attente d'une sortie de la zone de détection de l'élément considéré. Si le compte à rebours arrive à son terme, dans un exemple non limitatif de 5 secondes après que l'élément considéré a été détecté dans la zone de détection, alors on passe à une étape 306 dans laquelle l'opération de fermeture automatique est annulée.

Dans l'hypothèse où l'élément considéré est détecté comme sorti de la zone de détection, on procède, dans une étape 307, à la fermeture automatique du hayon. Cependant, on active alors une étape de décision 308 pour déterminer si un retour d'un élément dans la zone de détection se produit. Dans la négative, l'opération de fermeture est poursuivie jusqu'à son terme dans une étape 309. Dans l'affirmative, on procède, dans une étape 310, à l'interruption de la fermeture automatique, tant qu'une nouvelle sortie de la zone de détection n'est pas reconnue dans une étape de décision 311. Dès qu'une nouvelle sortie de la zone de détection est reconnue par les capteurs, alors on procède à la reprise de la fermeture automatique entreprise dans l'étape 307.

En pratique, la sortie de zone de détection 206, est déterminée par une détection de l'élément dans une zone extérieure 213, qui se situe à la périphérie de la zone de détection 206 et qui est défini par la couverture effective de détection des capteurs 201 à 204 diminuée de la zone de détection 206, tel qu'illustré sur la Fig. 2.

On notera que sur les côtés arrière du véhicule, la couverture de détection des capteurs est insuffisante pour assurer la détection d'un élément dans cette zone extérieure 213. La fermeture automatique du hayon ne s'effectuera pas alors que l'élément est sorti de la zone de détection 206.

A cet effet, afin de résoudre ce problème, dans un deuxième mode de réalisation non limitatif, la zone de détection 206 est composée de deux sous-zones de détection 206a et 206b, outre les zones d'ombre décrites précédemment.

Comme on va le voir ci-après l'étape de détection de la présence d'un élément dans la zone de détection est composée de deux sous-étapes dans lesquelles on détecte l'élément dans la première sous-zone 206a, et dans la deuxième sous-zone 206b.

La deuxième sous-zone 206b comporte une largeur qui permet de détecter de façon fiable un élément. Dans un exemple non limitatif la largeur est de 15 cm afin d'assurer une détection rapide, en moins de 150ms, d'un élément qui se déplace à une vitesse d'un mètre par seconde.

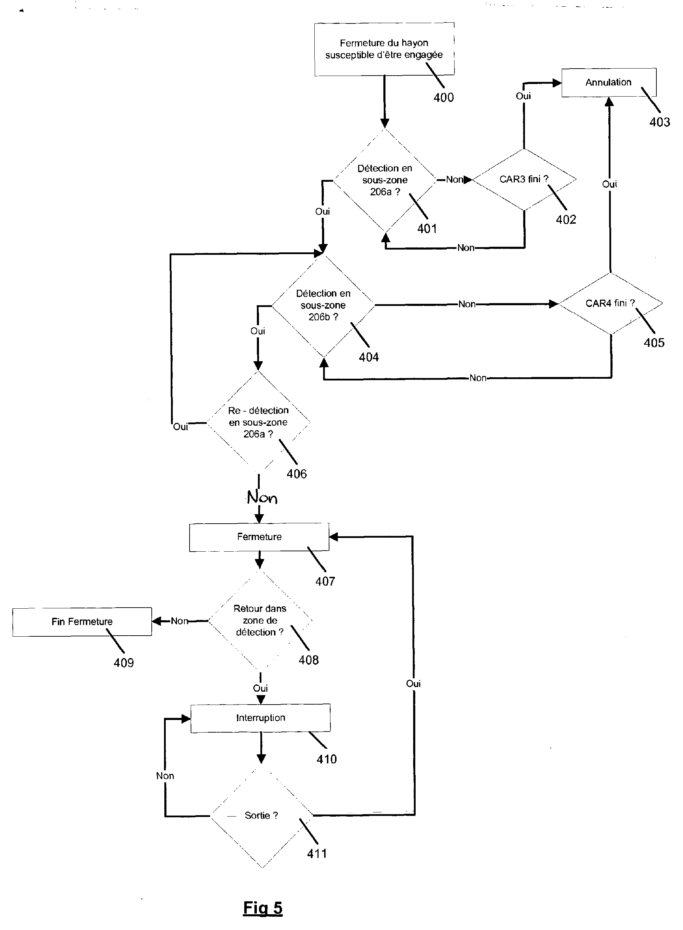

Selon le deuxième mode de réalisation, une première étape 400 de l'organigramme de la figure 5 réside dans le fait qu'une opération de fermeture automatique du hayon du véhicule est susceptible de se produire. Les cas où une telle fermeture est susceptible de se produire sont variés, comme expliqués dans le premier mode de réalisation.

A l'issue de l'étape 400 intervient une étape de décision 401 dans laquelle on détermine, au moyen des capteurs précédemment évoqués, si un élément se trouve dans la première sous-zone de détection 206a.

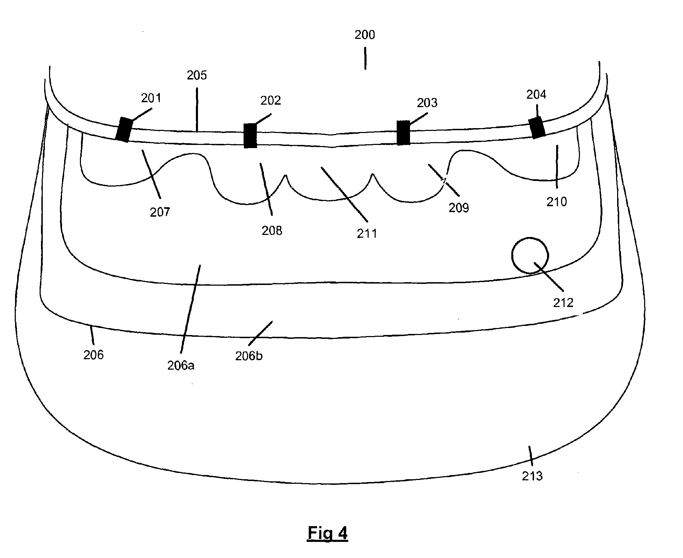

Dans un mode de réalisation non limitatif, on prévoit de placer un déclencheur de fermeture automatique, par exemple un capteur d'intention, à l'intérieur du coffre, sur un des côtés de celui-ci. Ainsi, l'utilisateur a peu de chance de se trouver dans une zone d'ombre car il devra être placé à l'extrémité, droite par exemple, de la zone de détection. Or, comme visible à la figure 4, une telle extrémité 212 ne constitue pas une zone d'ombre. La présence de l'utilisateur sera ainsi immédiatement détectée.

Dans la négative, c'est-à-dire si aucune détection d'élément n'est intervenue dans cette sous-zone 206a, on passe à une étape 402, dans laquelle un troisième compte à rebours CAR3 est déclenché. Tant que le compte à rebours CAR3 n'est pas arrivé à son terme, on demeure dans l'attente d'une détection dans la sous-zone de détection 206a. Si le compte à rebours CAR3 arrive à son terme, dans un exemple non limitatif de 20 secondes après la réception d'une commande relative à la fermeture automatique du hayon, alors on passe à une étape 403 dans laquelle l'opération de fermeture automatique est annulée. Dans ce cas, cela veut dire que l'élément est dans une zone d'ombre.

Dans l'affirmative où un élément est détecté dans la première sous-zone de détection 206a, une étape de décision 404 intervient, dans laquelle on détermine, toujours au moyen des capteurs évoqués, si l'élément détecté entre dans la deuxième sous-zone de détection 206b.

Dans la négative, c'est-à-dire si on ne détecte pas que l'élément considéré entre dans la deuxième sous-zone de détection 206b, on passe à une étape 405, dans laquelle un quatrième compte à rebours CAR4 est déclenché. Tant que le compte à rebours CAR4 n'est pas arrivé à son terme, on demeure dans l'attente d'une entrée dans la deuxième sous-zone de détection 206b de l'élément considéré. Si le compte à rebours CAR4 arrive à son terme, dans un exemple non limitatif de 5 secondes après que l'élément considéré a été détecté dans la première sous-zone de détection 206a, alors on passe à l'étape 403 dans laquelle l'opération de fermeture automatique est annulée. Dans ce cas, cela veut dire que l'élément est soit resté dans la première sous-zone de détection 206a, ou qu'il est retourné dans une zone d'ombre.

Dans l'hypothèse où un élément est détecté dans la deuxième sous-zone de détection 206b, une étape de décision 406 intervient, dans laquelle on détermine, toujours au moyen des capteurs évoqués, si l'élément détecté revient dans la première sous-zone de détection 206a.

Dans l'hypothèse où un élément est détecté dans la première sous-zone de détection 206a, on revient à l'étape précédente 404.

Dans la négative où un élément n'est pas détecté dans la première sous-zone de détection 206a, alors on procède, dans une étape 407, à la fermeture automatique du hayon. Dans ce cas, l'élément considéré est détecté comme sorti de la zone de détection 206. Cela signifie que soit il se trouve dans la zone extérieure 213, soit il se trouve en dehors de la couverture de détection des capteurs 201 à 204.

Dans d'autres exemples de mise en oeuvre, on peut prévoir de détecter la sortie non plus de la zone de détection 206, mais d'une zone de détection sécurisée plus large que la zone de détection telle que précédemment définie.

Cependant, on active alors une étape de décision 408 pour déterminer si un retour d'un élément dans la zone de détection 206 se produit. Dans la négative, l'opération de fermeture est poursuivie jusqu'à son terme dans une étape 409. Dans l'affirmative, on procède, dans une étape 410, à l'interruption de la fermeture automatique, tant qu'une nouvelle sortie de la zone de détection n'est pas reconnue dans une étape de décision 411. Dès qu'une nouvelle sortie de la zone de détection 206 est reconnue par les capteurs, alors on procède à la reprise de la fermeture automatique entreprise dans l'étape 407.

Ainsi, grâce à ce deuxième mode de réalisation, la fermeture automatique du hayon va pouvoir s'effectuer correctement lorsque l'élément sort de la zone de détection 206 et se trouve en dehors de la couverture de détection des capteurs 201 à 204. De plus, comme dans le cas du premier mode de réalisation, lorsque l'élément sort de la zone de détection 206 et se trouve dans la zone extérieure 213, la fermeture du hayon est également correctement effectuée.

## Revendications

1. Procédé sécurisé de fermeture automatique d'un hayon de véhicule automobile (200) équipé d'au moins un capteur de présence (201 ;202 ;203 ;204) d'un élément, notamment d'un individu, dans une zone de détection (206), ladite zone de détection présentant au moins une zone d'ombre (207 ;208 ;209 ;210), ledit procédé comportant l'étape de conditionner l'opération de fermeture automatique du hayon du véhicule à la réalisation des différentes opérations suivantes :
- recevoir une commande de fermeture automatique du coffre du véhicule ;
- dès la réception de la commande automatique de fermeture automatique du coffre du véhicule, déclencher (302) un premier compte à rebours d'une première durée ;
- détecter (301) la présence d'un élément dans la zone de détection ;
- détecter (304) une sortie dudit élément hors de la zone de détection ;
caractérisé en l'étape supplémentaire:
- si aucune présence d'élément n'a été détectée dans la zone de détection à l'issue du premier compte à rebours, annuler (303) l'opération de fermeture automatique du hayon du véhicule.

2. Procédé selon la revendication précédente **caractérisé en ce que** la commande de fermeture est reçue au moyen d'un capteur d'intention.

3. Procédé selon la revendication précédente **caractérisé en ce que** le capteur d'intention est disposé dans le coffre du véhicule, sur une des parois latérales dudit coffre.

4. Procédé selon l'une au moins des revendications précédentes **caractérisé en ce que** les capteurs de présence sont des capteurs utilisés pour une fonction d'aide au parking.

5. Procédé selon l'une au moins des revendications précédéntes **caractérisé en ce que** les capteurs font intervenir au moins une caméra orientée vers l'arrière du véhicule, ladite caméra coopérant avec des applications de traitement d'images.

6. Procédé selon l'une au moins des revendications précédentes **caractérisé en ce que** la première durée est comprise entre 15 et 25 secondes, notamment 20 secondes.

7. Procédé selon l'une au moins des revendications précédentes **caractérisé en ce qu'**il comporte les différentes étapes supplémentaires de :
- dès la détection de la présence d'un élément dans la zone de détection, déclencher (305) un deuxième compte à rebours d'une deuxième durée ;
- si aucune sortie dudit élément hors de la zone de détection n'est réalisée à l'issue du deuxième compte à rebours, annuler (306) l'opération de fermeture automatique du hayon du véhicule.

8. Procédé selon la revendication précédente **caractérisé en ce que** la deuxième durée est comprise entre 4 et 10 secondes, notamment 5 secondes.

9. Procédé selon l'une au moins des revendications précédentes **caractérisé en ce qu'**il comporte l'étape supplémentaire d'interrompre (310) l'opération de fermeture automatique du hayon dès qu'un retour en zone de détection (206) d'un élément est détecté.

10. Procédé selon la revendication précédente **caractérisé en ce qu'**il comporte l'étape supplémentaire de reprendre l'opération de fermeture automatique du hayon dès qu'une nouvelle détection de sortie dudit élément hors de la zone de détection est réalisée.

11. Procédé selon l'une au moins des revendications précédentes **caractérisé en ce que** la zone de détection (206) est composée de deux sous-zones de détection (206a) et (206b).

12. Procédé selon la revendication précédente, **caractérisé en ce que** la deuxième sous-zone de détection (206b) comporte une largeur qui permet de détecter de façon fiable un élément.

13. Procédé selon l'une au moins des revendications précédentes 11 ou 12, **caractérisé en ce que** l'étape de détection de la présence d'un élément dans la zone de détection (206) comporte les sous-étapes de :
- dès la réception de la commande automatique de fermeture automatique du coffre du véhicule, déclencher (402) un troisième compte à rebours (CAR3) d'une première durée ;
- si aucune présence d'élément n'a été détectée dans la première sous-zone de détection (206a) à l'issue du troisième compte à rebours (CAR3), annuler (403) l'opération de fermeture automatique du hayon du véhicule.

14. Procédé selon la revendication précédente, **caractérisé en ce que** l'étape de détection de la présence d'un élément dans la zone de détection (206) comporte les sous-étapes supplémentaires de :
- dès la détection de la présence d'un élément dans la première sous-zone de détection (206a), déclencher (405) un quatrième compte à rebours (CAR4) d'une deuxième durée ;
- si aucune présence d'élément n'a été détectée (404) dans la deuxième sous-zone de détection (206b) à l'issue du quatrième compte à rebours (CAR4), annuler (403) l'opération de fermeture automatique du hayon du véhicule.

15. Procédé selon la revendication précédente, **caractérisé en ce que** l'étape de détection de la présence d'un élément dans la zone de détection (206) comporte les sous-étapes supplémentaires de :
- dès la détection de la présence d'un élément dans la deuxième sous-zone de détection (206b), détecter (406) la présence de l'élément dans la première sous-zone de détection (206a) ;
- si aucune présence d'élément n'a été détectée dans la première sous-zone de détection (206a), procéder (407) à l'opération de fermeture automatique du hayon du véhicule.

## Claims

1. Secure method of automatically closing a motor vehicle tailgate (200) equipped with at least one sensor (201; 202; 203; 204) detecting the presence of an element, notably an individual, in a detection zone (206), said detection zone having at least one shadow zone (207; 208; 209; 210), said method comprising the step for conditioning the operation for automatically closing the tailgate of the vehicle on completion of the following various operations:
- receiving a command to automatically close the trunk of the vehicle;
- immediately the automatic command to automatically close the trunk of the vehicle is received, triggering (302) a first countdown of a first duration;
- detecting (301) the presence of an element in the detection zone;
- detecting (304) a departure of said element from the detection zone;
**characterized by** the additional step:
- if no element presence has been detected in the detection zone after the first countdown, canceling (303) the operation for automatically closing the vehicle tailgate.

2. Method according to the preceding claim, **characterized in that** the closure command is received by means of an intention sensor.

3. Method according to the preceding claim, **characterized in that** the intention sensor is positioned in the trunk of the vehicle, on one of the lateral walls of said trunk.

4. Method according to at least one of the preceding claims, **characterized in that** the presence sensors are sensors used for a parking aid function.

5. Method according to at least one of the preceding claims, **characterized in that** the sensors involve at least one camera oriented towards the rear of the vehicle, said camera cooperating with image processing applications.

6. Method according to at least one of the preceding claims, **characterized in that** the first duration is between 15 and 25 seconds, notably 20 seconds.

7. Method according to at least one of the preceding claims, **characterized in that** it comprises the additional various steps for:
- immediately the presence of an element is detected in the detection zone, triggering (305) a second countdown of a second duration;
- if no departure of said element from the detection zone has taken place by the end of the second countdown, canceling (306) the operation to automatically close the vehicle tailgate.

8. Method according to the preceding claim, **characterized in that** the second duration is between 4 and 10 seconds, notably 5 seconds.

9. Method according to at least one of the preceding claims, **characterized in that** it comprises the additional step of stopping (310) the operation to automatically close the tailgate immediately a return of an element to the detection zone (206) is detected.

10. Method according to the preceding claim, **characterized in that** it comprises the additional step of resuming the operation to automatically close the tailgate immediately a new detection of departure of said element from the detection zone is performed.

11. Method according to at least one of the preceding claims, **characterized in that** the detection zone (206) consists of two detection sub-zones (206a) and (206b).

12. Method according to the preceding claim, **characterized in that** the second detection sub-zone (206b) has a width that makes it possible to reliably detect an element.

13. Method according to at least one of preceding Claims 11 or 12, **characterized in that** the step for detection of the presence of an element in the detection zone (206) comprises the substeps for:
- immediately the automatic command to automatically close the trunk of the vehicle is received, triggering (402) a third countdown, (CAR3) of a first duration;
- if no element presence has been detected in the first detection sub-zone (206a) on completion of the third countdown (CAR3), canceling (403) the operation to automatically close the vehicle tailgate.

14. Method according to the preceding claim, **characterized in that** the step for detection of the presence of an element in the detection zone (206) comprises the additional substeps for:
- immediately the presence of an element is detected in the first detection sub-zone (206a), triggering (405) a fourth countdown (CAR4) of a second duration;
- if no element presence has been detected (404) in the second detection sub-zone (206b) on completion of the fourth countdown (CAR4), canceling (403) the operation to automatically close the vehicle tailgate.

15. Method according to the preceding claim, **characterized in that** the step for detection of the presence of an element in the detection zone (206) comprises the additional substeps for:
- immediately the presence of an element is detected in the second detection sub-zone (206b), detecting (406) the presence of the element in the first detection sub-zone (206a);
- if no element presence has been detected in the first detection sub-zone (206a), proceeding (407) with the operation to automatically close the vehicle tailgate.

## Patentansprüche

1. Gesichertes Verfahren zum automatischen Schließen einer Heckklappe eines Kraftfahrzeugs (200), das mit mindestens einem Anwesenheitsdetektor (201; 202; 203; 204) eines Elements, insbesondere einer Person, in einer Erfassungszone (206) ausgestattet ist, wobei die Erfassungszone mindestens eine Schattenzone (207; 208; 209; 210) aufweist, wobei das Verfahren den Schritt der Abhängigmachung des Vorgangs des automatischen Schließens der Heckklappe des Fahrzeugs von der Durchführung der verschiedenen folgenden Vorgänge aufweist:
- Empfang eines Befehls zum automatischen Schließen des Kofferraums des Fahrzeugs;
- bei Empfang des Befehls zum automatischen Schließen des Kofferraums des Fahrzeugs, Auslösen (302) einer ersten Rückzählung einer ersten Dauer;
- Erfassen (301) der Anwesenheit eines Elements in der Erfassungszone;
- Erfassen (304) eines Verlassens der Erfassungszone durch das Element;
**gekennzeichnet durch** den zusätzlichen Schritt:
- wenn keine Anwesenheit eines Elements in der Erfassungszone nach der ersten Rückzählung erfasst wurde, den Vorgang des automatischen Schließens der Heckklappe des Fahrzeugs zu annullieren (303).

2. Verfahren nach dem vorhergehenden Anspruch, **dadurch gekennzeichnet, dass** der Schließbefehl mittels eines Absichtssensors empfangen wird.

3. Verfahren nach dem vorhergehenden Anspruch, **dadurch gekennzeichnet, dass** der Absichtssensor im Kofferraum des Fahrzeugs an einer der Seitenwände des Kofferraums angeordnet ist.

4. Verfahren nach mindestens einem der vorhergehenden Ansprüche, **dadurch gekennzeichnet, dass** die Anwesenheitssensoren Sensoren sind, die für eine Parkhilfefunktion verwendet werden.

5. Verfahren nach mindestens einem der vorhergehenden Ansprüche, **dadurch gekennzeichnet, dass** die Sensoren mindestens eine zur Rückseite des Fahrzeugs ausgerichtete Kamera verwenden, wobei die Kamera mit Bildverarbeitungsanwendungen zusammenwirkt.

6. Verfahren nach mindestens einem der vorhergehenden Ansprüche, **dadurch gekennzeichnet, dass** die erste Dauer zwischen 15 und 25 Sekunden, insbesondere bei 20 Sekunden liegt.

7. Verfahren nach mindestens einem der vorhergehenden Ansprüche, **dadurch gekennzeichnet, dass** es die verschiedenen zusätzlichen Schritte aufweist:
- bei Erfassung der Anwesenheit eines Elements in der Erfassungszone eine zweite Rückzählung einer zweiten Dauer auszulösen (305);
- wenn kein Austritt des Elements aus der Erfassungszone nach der zweiten Rückzählung durchgeführt wird, den Vorgang des automatischen Schließens der Heckklappe des Fahrzeugs zu annullieren (306).

8. Verfahren nach dem vorhergehenden Anspruch, **dadurch gekennzeichnet, dass** die zweite Dauer zwischen 4 und 10 Sekunden, insbesondere bei 5 Sekunden liegt.

9. Verfahren nach mindestens einem der vorhergehenden Ansprüche, **dadurch gekennzeichnet, dass** es den zusätzlichen Schritt des Unterbrechens (310) des Vorgangs des automatischen Schließens der Heckklappe aufweist, sobald eine Rückkehr eines Elements in die Erfassungszone (206) erfasst wird.

10. Verfahren nach dem vorhergehenden Anspruch, **dadurch gekennzeichnet, dass** es den zusätzlichen Schritt der Wiederaufnahme des Vorgangs des automatischen Schließens der Heckklappe aufweist, sobald eine neue Erfassung des Austritts des Elements aus der Erfassungszone durchgeführt wird.

11. Verfahren nach mindestens einem der vorhergehenden Ansprüche, **dadurch gekennzeichnet, dass** die Erfassungszone (206) aus zwei Teilerfassungszonen (206a) und (206b) besteht.

12. Verfahren nach dem vorhergehenden Anspruch, **dadurch gekennzeichnet, dass** die zweite Teilerfassungszone (206b) eine Breite aufweist, die es erlaubt, ein Element zuverlässig zu erfassen.

13. Verfahren nach mindestens einem der vorhergehenden Ansprüche 11 oder 12, **dadurch gekennzeichnet, dass** der Schritt der Erfassung der Anwesenheit eines Elements in der Erfassungszone (206) die Teilschritte aufweist:
- bei Empfang des automatischen Befehls zum automatischen Schließen des Kofferraums des Fahrzeugs eine dritte Rückzählung (CAR3) einer ersten Dauer auszulösen (402);
- wenn keine Anwesenheit eines Elements in der ersten Teilerfassungszone (206a) nach der dritten Rückzählung (CAR3) erfasst wurde, den Vorgang des automatischen Schließens der Heckklappe des Fahrzeugs zu annullieren (403).

14. Verfahren nach dem vorhergehenden Anspruch, **dadurch gekennzeichnet, dass** der Schritt der Erfassung der Anwesenheit eines Elements in der Erfassungszone (206) die zusätzlichen Teilschritte aufweist:
- bei Erfassung der Anwesenheit eines Elements in der ersten Teilerfassungszone (206a) eine vierte Rückzählung (CAR4) einer zweiten Dauer auszulösen (405);
- wenn keine Anwesenheit eines Elements in der zweiten Teilerfassungszone (206b) nach der vierten Rückzählung (CAR4) erfasst wurde (404), den Vorgang des automatischen Schließens der Heckklappe des Fahrzeugs zu annullieren (403).

15. Verfahren nach dem vorhergehenden Anspruch, **dadurch gekennzeichnet, dass** der Schritt der Erfassung der Anwesenheit eines Elements in der Erfassungszone (206) die zusätzlichen Teilschritte aufweist:
- bei Erfassung der Anwesenheit eines Elements in der zweiten Teilerfassungszone (206b) die Anwesenheit des Elements in der ersten Teilerfassungszone (206a) zu erfassen (406);
- wenn keine Anwesenheit eines Elements in der ersten Teilerfassungszone (206a) erfasst wurde, den Vorgang des automatischen Schließens der Heckklappe des Fahrzeugs durchzuführen (407).
